(19) Europäisches Patentamt / European Patent Office / Office européen des brevets

(11) **EP 3 844 553 B1**

(12) **EUROPEAN PATENT SPECIFICATION**

(45) Date of publication and mention
of the grant of the patent:
**01.10.2025 Bulletin 2025/40**

(21) Application number: **19780361.2**

(22) Date of filing: **22.08.2019**

(51) International Patent Classification (IPC):
**G06V 40/18** *(2022.01)* **G06F 3/01** *(2006.01)*

(52) Cooperative Patent Classification (CPC):
**G06F 3/013; G06V 40/193**

(86) International application number:
**PCT/IB2019/057068**

(87) International publication number:
**WO 2020/044180 (05.03.2020 Gazette 2020/10)**

(54) **METHOD AND SYSTEM FOR GAZE ESTIMATION**

VERFAHREN UND SYSTEM ZUR BLICKKALKULATION

PROCÉDÉ ET SYSTÈME D'ESTIMATION DU REGARD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018 CH 10462018**

(43) Date of publication of application:
**07.07.2021 Bulletin 2021/27**

(73) Proprietor: **Eyeware Tech SA**
**1920 Martigny (CH)**

(72) Inventors:
• **ODOBEZ, Jean-Marc**
**1815 Clarens (CH)**
• **LIU, Gang**
**Beijing (CN)**
• **FUNES MORA, Kenneth Alberto**
**1018 Lausanne (CH)**

(74) Representative: **P&TS SA (AG, Ltd.)**
**Avenue J.-J. Rousseau 4**
**P.O. Box 2848**
**2001 Neuchâtel (CH)**

(56) References cited:
**WO-A1-2014/146199**

## Description

### Field of the invention

The present invention concerns a method and a system for the estimation of the gaze of a user, notably for human-machine interfacing, Virtual Reality, health caring and for mobile applications.

The invention further concerns a method and a system for estimation a movement of the gaze of a user.

### Description of related art

Gaze, i.e. the point at which a user is looking and/or the line-of-sight with respect to his eye, is an important cue of human behaviours. Gaze and movements thereof are indicators of the visual attention as well as of given thoughts and mental states of people.

Gaze estimation provides thus a support to domains like Human-Robot-Interaction (HRI), Virtual Reality (VR), social interaction analysis, or health care. With the development of sensing function on mobile phones, gaze estimation can furthermore provide a support to a wider set of applications in mobile scenarios.

Gaze can be modelled in multiple ways according to the use case and/or to the application domain. When interacting with computers, tablets or mobile devices, gaze may represent the point of regard, i.e., the point where a person is looking at within a 2D flat screen, in either metric values or in pixel coordinates. When modelling attention to 3D objects, gaze can be the 3D point of regard obtained by intersecting the line-of-sight to the 3D environment. Alternatively, gaze can be modelled as the line-of-sight itself, be it the visual axis or optical axis of the eye, represented as a 3D ray, as a 3D vector or having simply an angular representation defined with respect to a preferred coordinate system.

Non-invasive vision-based gaze estimation has been addressed based on geometric models of the human eye and on appearance within an image.

Geometric approaches rely on eye feature extraction (like glints when working with infrared systems, eye corners or iris centre localization) to learn a geometric model of the eye and then infer gaze using these features and model. However, they usually require high resolution eye images for robust and accurate feature extraction, are prone to noise or illumination, and do not handle well head pose variabilities and medium to large head poses.

Others methods rely on an appearance of the eye within an image, i.e. directly predicting the gaze itself directly from the input image by means of a machine learning based regression algorithm, that maps the image appearance into gaze parameters. Such regression algorithm would adapt a model's parameters according to training data, which would be composed of samples of eye, face, and/or body images which are labelled with ground truth gaze. By adapting the model parameters according to the training data, the model becomes capable of predicting the gaze of unseen images (test data). These approaches carry the potential of providing a robust estimation when dealing with low to mid-resolution images and may obtain good generalization performance. However, the accuracy of appearance-based methods is generally limited to around 5 to 6 degrees, while exhibiting high variances and biases between subjects. Moreover, the robustness of these methods is generally dependent on head poses and eye shapes, as well as the diversity of the training set.

WO 2014/146199 A1 relates to a system and method for performing eye gaze tracking.

### Brief summary of the invention

The aim of the invention is to provide a method and a system for estimating the gaze of a user and/or a movement of the gaze of a user that is exempt, or at least mitigate, the drawback of knowns gaze estimation methods and systems.

Another aim of the invention is to provide a method and a system for gaze analysis, e.g. for supporting and/or enabling gaze-related and/or user-related applications.

According to the invention, these aims are achieved by means of the method of claim 1, system of claim 10, and the computer readable storage medium of claim 15.

The proposed solution provides a more accurate estimation of the gaze of a user and of a relative or absolute movement of the gaze thereof, this with respect to known methods and systems by relying on an estimation of gaze differences. In particular, the proposed solution provides a robust estimation of the gaze of a user captured in a low resolution image.

In fact, the comparison between multiple, at least two, images capturing eyes of individuals (preferably of the same eye of the same user) permits to avoid annoyance factors which usually plague single-image prediction methods, such as eye alignment, eyelid closing, and illuminations perturbations.

In an embodiment, the proposed solution rely on a regression model-based machine learning, notably in form of a deep neural network, being trained to estimate the difference in gaze between a set of at least two images. In a preferred embodiment, the regression model-based is trained to estimate the difference in gaze between only two images. In another embodiment, the regression model-based machine learning is trained to estimate a common difference and/or a set of differences in gaze between a set of images.

In a preferred embodiment the deep neural network contains a series of layers, that may include 2D convolution filters, max-pooling, batch normalization, rectifiers, fully connected layers, activation functions and other similar configurations.

In a preferred embodiment, a set of layers is trained to first extract an feature map or feature vector which is an intermediate representation of each sample image independently, i.e., using the same model parameters and without considering the other sample images. Another set of layers placed in a later stage is trained to extract the difference in gaze between the sample images, by receiving as input the feature maps of all sample images, preferably two, joined (e.g. as a simple feature vector concatenation) as a joint feature map which can be used to compared the samples with the purpose of estimating the gaze difference.

This particular solution provides a more robust estimation than known solutions while requiring fewer samples of the eye of the user for providing a robust estimation of the gaze difference (i.e. adapting the system to the particular user eye appearance, position, etc.) .

Brief Description of the Drawings

The invention will be better understood with the aid of the description of an embodiment given by way of example and illustrated by the figures, in which:

Fig. 1 shows a flowchart describing a method for estimating the gaze of a user, according to the invention;

Fig. 2 shows details about determining the gaze of the user based on the reference gaze and on the estimated gazes difference between the input image and the reference image;

Fig. 3 shows a schematic view of a particular embodiment of the invention, notably based on a (regressive model-based) differential machine in mode of operation;

Fig. 4a,b schematically show training processes usable for the differential machine of Fig. 3;

Fig. 5 shows a particular embodiment of the differential machine of Figure 3;

Fig. 6 shows a portable device configured to estimate the gaze orientation of the user, according to the invention.

Detailed Description of possible embodiments of the Invention

The invention concerns a method and a system for estimating the gaze of the user and/or for estimating a (relative or absolute) movement of the gaze of the user based on a difference in gaze between image samples, at least one of these images capturing an eye of the user (e.g. by capturing the eye region, the face, the upper-body or even the body of the user).

The difference in gaze can be then used to estimate the gaze of the user by relying on the (given or known) gaze of reference images. Thus, the method and the system rely, instead on estimating the gaze directly from an image with the eye of the user, on estimating a difference in gazes captured in multiple images.

The difference in gaze between reference images, paired with a known gazes, and an input image, without a known gaze, may be used to compute the gaze of said input image by composing the known gaze of the reference samples and the estimated gaze difference, notably provided by a differential gaze estimator.

According to the invention, gaze is (a numerical) representation of) the point at which a user is looking and/or the line-of-sight with respect to the eye of the user. Gaze can be thus be represented in multiple ways according to the application. When interacting with computers, tablets or mobile devices, gaze can be represented as the 2D point of regard, i.e., the point where a person is looking at within the 2D flat region, in either metric values with respect to a spatial referential frame fixed to the screen in such scenario, or in pixel coordinates. When modelling attention in and towards the 3D environment, gaze can be represented as the 3D point of regard indicating the point in the 3D space where the person is looking at. Alternatively, or complementarily, gaze can be represented as a 3D ray originating from the eyeball centre, the fovea, the intersection point between the visual and optical axis, or a fixed point within the head and which is directed towards the 3D point of regard. Gaze can be represented as a 3D vector alone, i.e., in case the origin point is unnecessary. The gaze can be represented as a 3D vector or as a set of angles indicating the sequential rotation of a reference vector. Such 3D representations may furthermore be defined with respect to a preferred spatial reference, such as the head itself as it may beneficial in the case of systems relying on head tracking as a prior step, with respect to a camera linked reference frame or with respect to a fixed world reference frame.

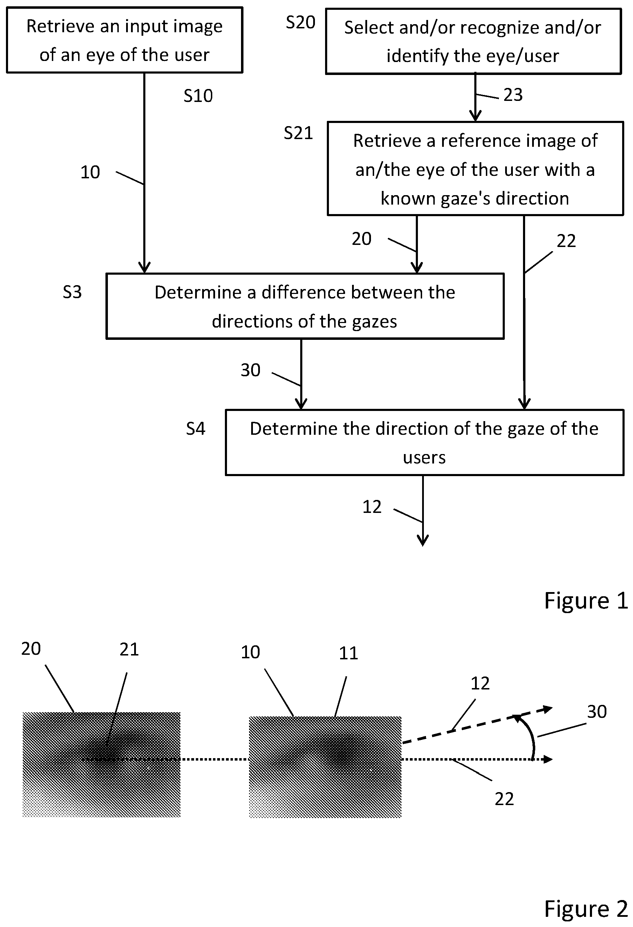

Figure 1 shows a flowchart describing a method for estimating the gaze of a given user based on such differential approach.

The method comprises a step of retrieving an input image 10 displaying an eye 11 of the user (S10). The image can contain the entire body, the entire face, or only the eye region of the user.

According to the common sense, an image is a two-dimensional (preferably numerical) representation of a particularly sensed physical phenomenon, e.g. a two-dimensional (2D) colour image, a 2D monochrome or 2D binary image, 2D multispectral image, 2D depth map, 2D disparity, 2D amplitude or phase shift, or a combination of the previous.

The method also comprises a step (S21) of retrieving a reference image 20 of the same user as the one of the input image, the reference image displaying an eye of an individual with a given or known gaze (reference gaze) 22. The reference image can contain the entire body, the entire face, or only the eye region of the individual. Preferably, the individual is the same user, and most preferably the eye of the reference image is the same eye of the input image.

The reference gaze can be provided for example by tagging, pairing and/or linking the reference image with a numerical representation of the reference gaze according to the two dimensional or three dimensional representations as required by the use case

The method then comprise a step of processing the input image 10 and the reference image 20 so as to estimate a gaze difference 30 between the gaze 12 of the eye within the input image and the gaze 22 of the eye within the reference image (cf. Figure 2).

Depending on the used representation of the gaze, the gaze difference can be a (relative or absolute) difference in position of the point where the user person is looking of (e.g. in pixels or in a metric unit). The angular difference gaze can be a difference of vectors, or as 3D rotations. In an embodiment, the gaze difference can be an angular value according to a coordinate system and/or a two-dimensional or three-dimensional vector.

Alternatively, the gaze difference can be a relative indication with respect to the reference gaze provided by the reference image, eventually with respect to a coordinate system, such as for indicating a user'gaze being directed on a point being upper, lower, right, and/or left with respect to the one of the reference image..

The method then comprises a step of estimating the gaze 21 of the user based on the reference gaze 22 of the reference image 20 and on the estimated gaze difference 30. In case the gaze is relatively described with reference to the position of the eye, the gaze difference can be an angular difference 30 between the two gazes, as illustrated in Figure 2.

The input image 10 and/or the reference image 20 can be provided by a camera, i.e. an optical device providing an image (i.e. a two-dimensional representation) of a particular sensed physical phenomenon, e.g. electromagnetically radiations notably within the human's visible frequency range and/or near-IR range. The camera can be a colour or monochrome (e.g. binary) camera, a 2D multispectral camera, a 2D depth map camera, 2D disparity camera, 2D amplitude or phase shift camera.

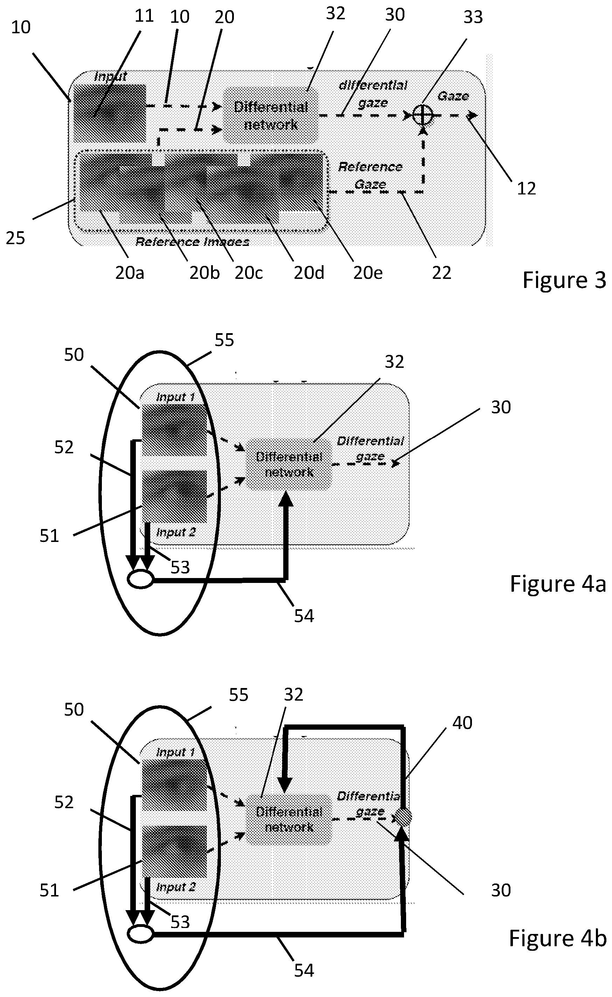

As illustrated in Figure 3 and 4, the estimation of the gaze difference 30 from the input image 10 and from the reference image 20 can be provided by means of a differential machine 32.

The differential machine 32 can be configured to implement machine learning based regression algorithms that maps the appearance of the images into differential gaze parameters. Such algorithm may be a support vector regression approach, a neural network, a capsule network, a gaussian process regressor, a k-nearest neighbour approach, a decision tree, a random forest regressor, restricted boltzmann machines, or alternative or complementary regression strategies which furthermore receive as input either the image itself, a pre-processed version of the image, or a feature vector constructed from computer vision based representations such as histograms of oriented gradients, local binary patterns, dense or local SIFT or SURF features.

Alternatively or complementarily, the differential machine 32 can rely on a support vector machine, nearest neighbors, and/or on random forest.

The differential machine 32 can be configured to compute a gaze difference from a set of images comprising more than two images. The set can comprise more than one input image and/or more than one reference image. In particular, the differential machine 32 can be configured to compute a common gaze difference (e.g. a mathematical or logical combination of each gaze differences between a couple of images) and/or a set of gaze differences, each gaze difference of the set concerning a couple of images.

The differential machine 32 can be a system (e.g. a dedicated electronic circuit, an HW/SW module, or a combination thereof) configured to execute and/or to enable the above-describes algorithms. The internal parameters of the differential machine can be inferred during a dedicated calibration and/or training process. The differential machine 32 is advantageously configured to simultaneously process the input image 10 and the reference image 20 (e.g. selected within the set of reference images $20_{a-e}$ and/or the database 25) so as to provide (in the operation mode) a desired outcome, i.e. an estimation of the difference 30 between the gaze of the images.

The differential machine 32 (in training mode) can be trained with a training dataset 55 built by pairing a set of training images, the set comprising at least a first and a second training image 50, 51, each training image of the set displaying an eye of an individual.

In an embodiment, the training images of the set, e.g. the first and the second training image 50, 51, are related to the same user and/or individual, more preferably of a same given eye. In another, the training dataset may contain training images (e.g. couple of images) from multiple individuals (users). Preferably, wherein the training set may contain training images from multiple individuals (users), each pair of first and second training image 50, 51 are related to the same user, more preferably of the same given eye.

Preferably, the gaze 52, 53 of the eye captured in the first and in the second training image is known (e.g. imposed at the acquisition time of the image or/and determined, measured or inferred after the acquisition of the image) so as to provide a supervised training of the differential machine. In such case, the training dataset 55 also comprises the measured gaze difference 54 calculated and/or determined from the gaze 52, 53 of the first and second training image, as illustrated in Figure 4a, so as to (automatically) infer internal parameters of the differential machine.

In Figure 4b, the differential machine 32 is trained by providing the training images and the error 40 (e.g. difference) between the estimated difference gaze 30 and the measured difference gaze 54.

Such algorithm may be a support vector regression approach, a neural network, a capsule network, a gaussian process regressor, a k-nearest neighbour approach, a decision tree, a random forest regressor, restricted boltzmann machines, or alternative or complementary regression strategies which furthermore receive as input either the image itself, a pre-processed version of the image, or a feature vector constructed from computer vision based representations such as histograms of oriented gradients, local binary patterns, dense or local SIFT or SURF features.

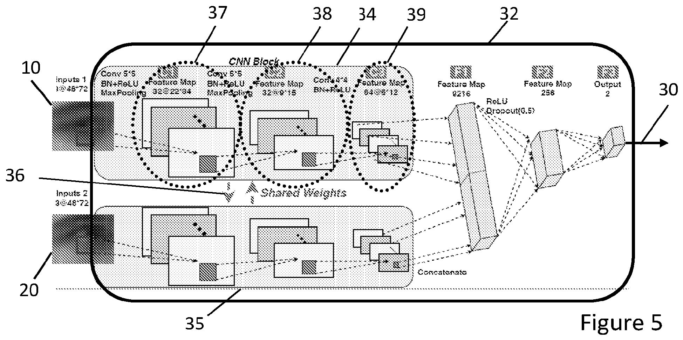

The differential machine 32 of the illustrated embodiment of Figure 5 is designed and trained to predict the gaze difference between two images, relying on neuronal networks 34, 35, notably on convolutional neuronal networks 34, 35, and on image dimension reductions.

The illustrated differential machine 32 relies notably on two parallel networks 34, 35 with shared weights 36, in which a pair of distinct images 10, 20 (e.g. the input and the reference image) is used as input, one for each network, each parallel networks relying on a (convolutional) neuronal network, and generate as output a feature map which is an intermediate representation of each image. The machine 32, after the two parallel networks 34, 35 take the features maps of each image and concatenate them into a joint feature map, which is then used in a sequence of fully connected layers trained to compare the intermediate representation of the images as to compute a gaze difference 30 from it.

Each feature map retrieving neural network 34, 35 comprises (or consists of) three (convolutional) neural layers 37, 38, 39, all of them proceeded by a batch normalization (BN) and/or rectified linear (ReLU) units. Moreover, input data of the first and of the second neural layers 38 are provided by processing incoming data, outcomes of the first neural layers 37 respectively, by means of Max pooling units (i.e. units combining outputs of neuron clusters at one layer into a single neuron) for reducing the image dimensions. After the third layer, the feature maps of the two input images are notably flatten and concatenated into a new tensor. Then two fully-connected layers are applied on the tensor to predict the gaze difference between the two input images.

This structure permits to map the image space to a new feature space where samples from the same class are close, while samples from different classes are farer away. In the training mode, the loss function can be defined by comparing the predicted gaze difference 30 with the measured (i.e. ground-truth) differential gaze 54.

Advantageously, as schematically illustrated in Figure 3, the estimation of the gaze captured the input image 10 can rely on estimating a set of differences in gaze (e.g. angular differences) with respect to a plurality of distinct reference images $20_{a-e}$ , each reference image being different from another image of the set and preferably displaying a gaze reference being different from the gaze reference of another image of the set.

In a simplest embodiment, the plurality of distinct reference images can comprise the above-described image reference (first image reference) and an additional image reference (second image reference). In such case, the method comprises an additional step of processing the input image and the said second reference image so as to estimate a second gaze difference between the gaze of the eye within the input image and the gaze of the eye within the second reference image. The gaze of the user, i.e. of the input reference, user can thus be retrieved using:

the first and/or the second gaze difference, and
the first and/or second gaze reference.

A set 25 of reference images $20_{a-e}$ can thus be provided so as to permit a plurality of distinct estimation of the angular differences 30, each estimation concerning the input image and one of the reference images of the set 25. Each reference image of the set concerns an eye of the same user (preferably of the same eye) with a (known/given) distinct orientation 22.

The distinct orientations 22 of the reference images of the set 25 can be comprised, and notably being regularly distributed, within a given angular range, according to the selected 2D/3D coordinate system.

These estimations can be provided by successively process the input image and one of the reference image of the set 25 by means of the same differential machine 32. Alternatively, a plurality of estimations can be simultaneously executed by means of a plurality of the same differential machine 32 operating in parallel.

The method can thus comprise:

retrieving a plurality (e.g. a set 25 of) of distinct reference images 20 of an eye 21 of individuals (preferably of the same user, most preferably of the same eye of the input image), each reference images 20 preferably being related to a distinct, reference gaze;

processing the input image 10 and the retrieved reference images so as to estimate a common gaze difference and/or a plurality (e..g. set of) of gaze differences (e.g. angular differences 30); and

combining the estimated common gaze difference and/or the gaze differences and the gazes reference so as to retrieve the gaze 21 of the input image (i.e. of the user).

The number of gaze difference estimations can correspond to the number of reference images of the set 25 (i.e. each reference images is used to estimate one of the plurality of angular differences). Alternatively, a subset of reference images can be selected for providing the plurality of angular difference, e.g. based on the eye captured in the input image, or based on similarity criterion and/or incrementally up to provide a gaze estimation within a confidence interval (e.g. below a given confidence level).

The gaze 21 of the user can thus be determined by an estimator 33 taking into account the common gaze difference and/or the set of estimated gaze differences and the gaze references of the retrieved reference images. This operation can comprise steps of averaging, filtering and/or eliminating outliers.

In particular, the gaze 21 of the input image 10 can be inferred by weighting each single estimation of the gaze provided by each couple of images, e.g.

$$\mathbf{g}^{sm}(I) = \frac{\sum_{F \in \mathcal{D}_c} w\left(I, F\right) \cdot \left(\mathbf{g}^{gt}(F) + \mathbf{d}^p(I, F)\right)}{\sum_{F \in \mathcal{D}_c} w\left(\mathbf{d}^p(I, F)\right)}$$

where: "I" is the input image,

"$g^{sm}(I)$" is the gaze of the input image,

"F" is the reference image,

"$D_c$" is a set of reference images,

"$d^p(I,F)$" is the gaze difference between the input image and the reference image F,

"$g^{gt}(F)$" is the gaze of the reference image F,

"$w(\cdot)$" is a weighting factor.

The weighting factor w(I, F) indicates the importance, i.e. a robustness, of each estimation of the gaze based on input image I and reference image F or a indication of how convenient it is to use the given reference image based on proximity.

Advantageously, the weighting factor can be defined as function of the similarity between the input image and the reference image. In particular, the estimated gaze difference can be used as an indication of the similarity, i.e. w($d^p(I,F)$). In such case, a zero-mean Gaussian distribution $\mathcal{N}(0,\sigma)$ can be used as a weight function. The gaze 21 of the user can thus be formulated as following:

$$\mathbf{g}^{sm}(I) = \frac{\sum_{F \in \mathcal{D}_c} w\left(\mathbf{d}^p(I, F)\right) \cdot \left(\mathbf{g}^{gt}(F) + \mathbf{d}^p(I, F)\right)}{\sum_{F \in \mathcal{D}_c} w\left(\mathbf{d}^p(I, F)\right)},$$

Additionally or complementarily, the weighting factor can be function of:

the used method for estimating the gaze difference, and/or

the used process for training and/or setting up the used method; and/or

parameters thereof.

The method can comprise a step of selecting, recognizing and/or identifying the eye of the user (i.e. the right or the left eye of the user) so as to permit to retrieve a reference image concerning the same eye, notably from the set and/or database. Alternatively or complementarily, the method can comprise a step of selecting, recognizing and/or identifying the user so as to permit to retrieve a reference image related to the (same) user, notably from the set and/or database.

This step can comprise a step of acquiring a numerical identifier (ID) and/or an image of the user's body (such as the face, a fingerprint, a vein pattern or an iris), so as to provide an identification and/or a recognition of the eye and/or the user, notably within a list of registered users. The identification and/or recognition of the eye and/or user can, alternatively or complementarily, rely on the same input image.

Alternatively, or complementarily, this step can comprise a step of selecting the eye and/or the user within a list.

The user and/or eye can be then indicated by an identifier 23, providing then a selective retrieving of the reference image 20 concerning the (selected, recognized and/or identified) eye and/or user.

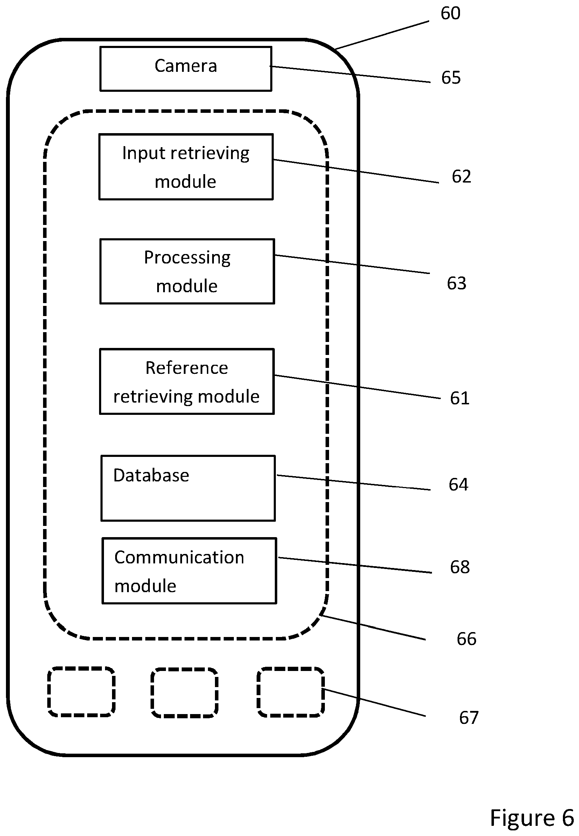

The method can be enabled by a system 60, as illustrated in Figure 6

The system 60 for estimating the gaze 12 of the user comprises:

an input image retrieving module 62 configured to execute the above-described step of retrieving the input image 10;
a reference image retrieving module 61 configured to execute the above-described step of retrieving the (first) reference image, the second reference image or the plurality (set) of reference images; and
a processing module 63 configured to execute the above-described steps of:

processing the input image (10) and the (first) reference images, the second reference image and/or the plurality (set) of the reference images so as to estimate the (first) gaze difference, the second gaze difference, the common gaze difference and/or the plurality (set) of gaze differences, and
retrieving the gaze 12 of the user based on:

the (first) gaze difference 30, the second gaze difference and/or the plurality (set) of gaze differences and on the (first) gaze reference 22, the second gaze reference and/or the plurality (set) of gaze references.

The gaze 12 can be displayed on a screen 66 of the system. Alternatively or complementarily, the gaze 12 can be transmitted by a data link to another module of the system 60 and/or to a remote server or system for further processing and/or as input of a given application, notably for Robot-Interaction (HRI), Virtual Reality (VR), social interaction analysis, and/or for health care.

Preferably, the system 60 comprises a communication module 68 for transmitting the gaze 12 to a device or system, preferably wirelessly.

As above- described, the gaze difference can be estimated by means of the differential machine 32 in the mode of operation.

According to the invention, the differential machine 32 in mode of operation (cf. Figure 3) and the differential machine 32 in learning mode (cf. Figure 4) can be distinct machines or a same machine capable to operate in the learning mode and in mode of operation.

In the latter case, the differential machine is operationally located in the processing module 63. The system 60 can thus be configured to provide the user or an operator to switch the differential machine between the mode of operation and the learning mode, e.g. by means of an I/O interface such as a (tactile) screen 66 and/or a (physical or virtual) button 67. Advantageously, the system is configured to enable the described calibration (training) process.

In case of distinct machines, the differential machine 32 of the processing module 63 can be configured by using parameters provided by a second (similar or identical) differential machine 32 being trained in another module of the system 60 and/or on a third party system by means of the above described calibration (training) process.

The first and/or second reference image and/or the set of reference images can be stored within a database 64, notably being stored in a dedicated memory or shared memory of the system 60.

As illustrated in Figure 6, the input image retrieving module 62 can comprise an image acquisition device 65, preferably in form of the above- described camera, configured to provide the input image. The first, second and/or the set of reference images can be provided by the same image acquisition device 65 (e.g. camera) or by another image acquisition device being part of the system 60 or of a third party system. The image acquisition device 65 can also provide an image for providing the recognition and/or identification of the eye and/or user of the input image.

The system can be a distributed system comprising a plurality of units being connected by one or more data links. Each unit can comprise one or more of the above-described modules. Alternatively or complementarily, one of the above described modules can be distributed in more units.

Alternatively, a system 60 can be a standalone device, in form of a personal computer, a laptop, a transportable or portable device. In Figure 6 shows an exemplary embodiment of the system being a hand-held device 60, such as a tablet and a smartphone. The system can also be an embedded in a robot, a vehicle, integrated in a smart home.

Each of the above-mentioned modules can comprise or consisting in an electronics circuits and/or on a list of software instructions executable on a module-dedicated processor or on a general-purpose processor of the system that can be temporarily allocated for executing module's specific functions.

The above-mentioned database 64 can be entirely or partially located and/or shared in a local memory of the system, in a remote accessible memory (e.g. of a remote located server) and/or on a cloud storage system.

According to one aspect of the invention, the above- described differential method and differential machine 32 can be used, not only for gaze estimation, but also for other gaze-related and/or user-related applications (e.g. systems, devices and/or methods).

The differential method and differential machine refers to the differential operation that retrieves (estimate) a or a set of differences in gaze between 2 or more image samples, each image being provided with or without a gaze reference (e.g. given and/or measured gaze). If the gaze is described in terms of the pixel coordinates of a 2D point on a screen towards which the person is looking at, then the gaze difference can be a 2D vector in pixel coordinates describing how much the looked point changes between two images. If gaze is described in terms of the angles of a 3D gaze vector, then the gaze difference can be an angular change (angular difference) between the 3D gaze vectors from two different images.

Gaze-related and user-related applications advantageously relies on analysis of the gaze of a given user. Gaze analysis can be denoted as the process of extracting a numeric or semantic representation of a state of an individual linked to where the person is looking or how the person is looking through time. One state can be the gaze itself, thus performing the task of gaze estimation, here based on differential gaze estimation. One additional state of an individual can be the currently exhibited eye movement, i.e., whether the person is performing a saccadic eye movement, or whether the individual is fixating to a single point.

In a gaze estimation application, the differential method and differential machine 32 can be used to estimate a gaze difference between an input image and one or more references images, each reference image having a reference gaze (gaze ground truth). The gaze of the user can be estimated based on the estimated gaze difference and the reference gazes.

The differential method and differential machine 32 can be used for gaze (or eye) tracking. A series of gaze estimations can be provided by a repetition of a differential operation on a new input image and one or more references images. Alternatively, a first gaze estimation is provided by a differential operation on the first input image and one or more references images, while successive gaze estimations are estimate by determining the gaze differences with respect to this first gaze estimation (e.g. by a differential operation on a new input and the previous input image). Alternatively, a first gaze estimation is provided by an absolute gaze estimation system and thus said first image may be added to the set of reference images.

The differential method and differential machine 32 can be used for (eye/gaze) Endpoint Prediction, e.g. a prediction of the eye position (or gaze) with respect to the current position of the eye (gaze) Provided the differential operation has a high accuracy and high framerate, it is possible to predict, after the eye starts to move, what is the time instant in the future in which the eye is going to stop moving.

The method for gaze analysis (notably for estimating the differences/variations of gaze) of a user can thus comprise steps of:

retrieve an input image (10) of an eye (11) of a user;
retrieve a given image (20) of an eye (21) of an individual;
processing the input image (10) and said first reference image (20) so as to estimate a first gaze difference (30) between the gaze (12) of the eye in the input image and the gaze (22) of the eye in said first reference image.

In some embodiments, the given image is associated with a reference gaze (e.g. reference image).

The differential method and differential machine 32 can be used for classifying into eye movements types (e.g. fixations, saccades, etc). The differential operation can provided a time series of differential gaze estimations that can be provided as an input to an system (e.g. relying and/or comprising a classification algorithm, such as also another neural network) so to predict a classification of the series of movements (e.g. whether the eye is exhibiting a saccadic movement, a fixation, a micro-saccade, etc).

The differential method and differential machine 32 can be used for estimating a mental state of the user. The differential operation can provided a time series of differential gaze estimations providing a measure and/or a classification of user's eye movements, e.g. microsaccades, permitting an estimation and/or a determination of a particular mental condition and/or state of the user.

For example, the differential method and differential machine 32 can be used for detecting fatigue and/or drowsiness. According to a time series of gaze differences, it may be possible to infer whether the individual is tired, due to performing erratic or slow eye movements. The differential operation can provide a presence or an absence of relative mouvements of the eye/gaze of the user, a frequency and/or speed thereof, notably an unusual eye movements, and therefore to detect fatigue and/or drowsiness.

The method for gaze analysis (notably for predicting the time to endpoint or fatigue/drowsiness) of a user can thus comprise steps of

retrieving a time series of image (image samples) of an eye of the user;
retrieving the gaze difference between successive image samples using the time series of gaze differences to:

predict a state of eye movements or of the user and/ or
to classify the eye/gaze movements (e.g. a fixation state or a saccade state).

Alternatively, the method for gaze analysis (notably for predicting the time to endpoint or fatigue/drowsiness) of a user can thus comprise steps of

retrieving a time series of (image samples) images of an eye of the user;
retrieving the gaze difference between successive image samples
retrieving a model of eye movements;
using the time series of gaze differences and the model of eye movements to
predict the time in the future in which the eye will stop moving; and/or
a state of eye movements or of the user and/ or
to classify the eye/gaze movements

According the above-described uses case and application , the method for analysing of a gaze of a user, can comprises steps of:

retrieve a set of images comprising at least two images, each image of said set containing appearances of at least one eye of an individual;
retrieve the differential machine (e.g. the regression model) 32 configured to use said set of images;
processing said set of images using said differential machine so as to estimate a differences in the gaze between at least two images of the set.

In some embodiments, at least one image of said set is provided with a reference gaze.
According the above-described uses case and application, a system (or a device) for analysing of a gaze of a user can comprise:

an image retrieving module (61, 62) a set of images comprising at least two images, each image of said set containing appearances of at least one eye of an individual, preferably at least one image of said set is provided with a reference gaze ; and
the differential machine (e.g. regression model) (32) configured to use said set of images so to estimate a differences in the gaze between at least two images of said set of images.

In an embodiment, the images are processed to normalize the eye appearance to remove variability caused by factors such as the head pose, camera position, illumination, sensor noise, numeric variation.
In a preferred embodiment, the images are rectified according to 2D-3D head pose measurements and either a 3D face model or depth measurements given, for example, by a time-of-flight camera, a stereo camera, a structured light camera, or by monocular 3D head tracking etc. to obtain an eye image with the appearance as if either the head pose was static and known, or, alternative, if the camera was positioned at a given viewpoint from the head and/or exhibit a specific imaging process.

List of reference numerals

| 10 | Input image |
|---|---|
| 11 | eye of the user |
| 12 | Gaze |
| 20, $20_{a-e}$ | Reference image |
| 21 | Eye |
| 22 | Reference gaze |
| 23 | User/eye identifier |
| 25 | Database |

| 30 | Gaze difference |
| 32 | Differential machine |
| 33 | Gaze estimator |
| 34,35 | Neural network |
| 36 | Shared weigh |
| 37, 38, 39 | Neural layer |
| 40 | Error between measured difference gaze and estimated difference gaze |
| 50,51 | Test/training image |
| 52,53 | Reference gaze |
| 54 | Measured gaze difference |
| 55 | Training dataset |
| 60 | Mobile device |
| 61 | Reference image retrieving module |
| 62 | Input image retrieving module |
| 63 | Processing module |
| 64 | Database |
| 65 | Camera |
| 66 | Screen |
| 67 | Button |
| 68 | Communication module |

**Claims**

1. A computer-implemented method for estimating a gaze of a user, comprising steps of:

    retrieving an input image (10) of an eye (11) of a user;
    retrieving a gaze (12) of the user

    **characterized in that** the step of retrieving the gaze (12) of the user comprises:

    retrieving a first reference image (20) of an eye (21) of an individual with a known first reference gaze (22);
    processing the input image (10) and said first reference image (20) so as to estimate a first gaze difference (30) between the gaze (12) of the eye in the input image and the known gaze (22) of the eye in said first reference image;
    using said gaze difference (30) and said known first reference gaze (22) to retrieve the gaze (12) of the user.

2. The method according to claim 1, further comprising steps of:

    wherein said step of retrieving the first reference image comprise a step of retrieving a set (25) of distinct reference images of eyes on individuals with known references gazes;

wherein said step of difference gaze estimating comprises a step of processing the input image (10) and said set of reference images so as to estimate a common gaze difference and/or a set of gaze differences between the gaze (12) of the input image and the gazes of the reference images;

and wherein said step retrieve the gaze (12) of the user comprises a step of using said common gaze difference and/or set of gaze differences and said reference gazes.

3. The method according to claim 2, wherein said set (25) of reference images comprises the first reference image and a second reference image with a second reference gaze; and wherein said step of retrieving the gaze (12) of the user comprises a step of weighting:

a first gaze outcome based on the first gaze difference and the first reference gaze; and
a second outcome based on a second gaze difference and said second reference gaze, the second gaze difference being provided by separately processing the input image (10) and the second reference image.

4. The method according to claim 2 or 3, wherein each reference image of said set (25) displaying the same eye of the same user with a distinct gaze.

5. The method according to any one of claims 1 to 4, wherein said first gaze difference (30), said second gaze difference, said common gaze difference and/or said set of gaze differences is/are estimated by means of a differential machine (32).

6. The method according to claim 5, wherein said differential machine (32) comprises a neural network (34, 35), preferably a deep neural network including convolutional layers to retrieve a feature map from each image separately (34, 35).

7. The method according to claim 6, wherein said differential machine (32) comprises a neural network (35), including neural layers (37, 38, 39), preferably fully connected layers, processing the joined feature maps of images to retrieve the gaze difference of said images.

8. The method according to any one of claims 5 to 7, wherein said differential machine (32) being trained with a training dataset (55) built by pairing a first and a second training image (50,51) of a same eye of the user and/or on an individual as input set with a measured gaze difference (54).

9. The method according to claim 8, when depending on claim 2, wherein at least one reference image of said set of reference images ($20_{a-e}$) is used as said first and/or second training image (50, 51).

10. A system (60) for gaze estimation , comprising:

an input image retrieving module (62) configured to retrieve an input image (10) of an eye (11) of a user;
**characterized in that** the system further comprises
a reference image retrieving module (61) configured to retrieve a first reference image (20) of an eye (21) of an individual with a first known reference gaze (22);and
a processing module (63) configured:

to process the input image (10) and the reference image (20) so as to estimate a first gaze difference (30) between the gaze (12) of the input image and the gaze (22) of said first reference image, and to
retrieve the gaze (12) of the user based on said first gaze difference (30) and said first reference gaze (22) of the first reference image.

11. The system according to claim 10, wherein

the reference image retrieving module (61) is configured to retrieve a set (25) of distinct reference images of eyes on individuals with known references gazes ; and wherein
the processing module (63) is also configured
to process the input image (10) and said set of reference images so as to estimate a common gaze difference and/or a set of gaze differences between the gaze (12) of the input image and the gazes of the reference images, and to

retrieve the gaze (12) of the user using said common gaze difference and/or set of gaze differences and said reference gazes.

12. The system according to claim 11, wherein said set (25) of reference images comprises the first reference image and a second reference image with a second reference gaze, wherein

the processing module (63) is configured to process the input image (10) and the second reference image so as to estimate a second gaze difference between the gaze (12) of the input image and the gaze of the second reference image; and wherein

the processing module (63) is configured to retrieve the gaze (12) of the user by weighting:

a first outcome based on the first gaze difference and said first reference gaze; and
a second outcome based on the second gaze difference and the second reference gaze.

13. The system according to any one of claims 10 to 12, wherein the processing module (63) comprising a differential machine (32) configured to retrieve said first gaze difference (30), said second gaze difference, said common gaze difference and/or said set of gaze differences.

14. The system according to claim 13, wherein said differential machine (32) comprises a deep neural network (34, 35), preferably having three convolutional neural layers (37, 38, 39).

15. A computer readable storage medium having recorded thereon a computer program, the computer program configured to perform the steps of the method according to any one of the claims 1 to 9, when the program is executed on a processor.

**Patentansprüche**

1. Ein Computer-implementiertes Verfahren zur Schätzung des Blicks eines Benutzers, das die folgenden Schritte umfasst:

Abrufen eines Eingabebildes (10) eines Auges (11) eines Benutzers;
Abrufen eines Blickes (12) eines Benutzers,

**dadurch gekennzeichnet, dass** der Schritt des Abrufen des Blickes (12) des Benutzers Folgendes umfasst:

Abrufen eines ersten Referenzbildes (20) eines Auges (21) eines Individuums mit einem ersten Referenz-Blick (22);
Verarbeiten des Eingangsbildes (10) und des ersten Referenzbildes (20), um eine erste Blickdifferenz (30) zwischen dem Blick (12) des Auges in dem Eingangsbild und dem Blick (22) des Auges in dem ersten Referenzbild zu schätzen;
Verwenden der Blickdifferenz (30) und des ersten Referenzblicks (22), um den Blick (12) des Benutzers zu erhalten.

2. Verfahren nach Anspruch 1, das ferner die folgenden Schritte umfasst:

wobei der Schritt des Abrufens des ersten Referenzbildes einen Schritt des Abrufens eines Satzes (25) von verschiedenen Referenzbildern von Augen von Personen mit bekannten Referenzblicken umfasst;
wobei der Schritt des Schätzens der Blickdifferenz einen Schritt des Verarbeitens des Eingangsbildes (10) und des Satzes von Referenzbildern umfasst, um eine gemeinsame Blickdifferenz und/oder einen Satz von Blickdifferenzen zwischen dem Blick (12) des Eingangsbildes und den Blicken der Referenzbilder des Satzes zu schätzen;
und wobei der Schritt des Abrufens des Blicks (12) des Benutzers einen Schritt der Verwendung der gemeinsamen Blickdifferenz und/oder des Satzes von Blickdifferenzen und der Referenzblicke umfasst.

3. Verfahren nach Anspruch 2, wobei der Satz (25) von Referenzbildern das erste Referenzbild und ein zweites Referenzbild mit einem zweiten Referenzblick umfasst; und wobei der Schritt des Abrufens des Blicks (12) des Benutzers einen Schritt der Gewichtung umfasst:

eine Gewichtung eines ersten Blickergebnisses auf der Grundlage der ersten Blickdifferenz und des ersten Referenzblicks; und

eine Gewichtung eines zweites Ergebnis auf der Grundlage einer zweiten Blickdifferenz und des zweiten Referenzblicks, wobei die zweite Blickdifferenz durch getrennte Verarbeitung des Eingabebildes (10) und des zweiten Referenzbildes bereitgestellt wird.

4. Verfahren nach Anspruch 2 oder 3, wobei jedes Referenzbild des Satzes (25) dasselbe Auge desselben Benutzers mit einem unterschiedlichen Blick anzeigt.

5. Verfahren nach einem der Ansprüche 1 bis 4, wobei die erste Blickdifferenz (30), die zweite Blickdifferenz, die gemeinsame Blickdifferenz und/oder der Satz von Blickdifferenzen mit Hilfe einer Differenzmaschine (32) geschätzt wird/werden.

6. Verfahren nach Anspruch 5, wobei die Differentialmaschine (32) ein neuronales Netz (34, 35) umfasst, vorzugsweise ein tiefes neuronales Netz mit Faltungsschichten, um eine Merkmalskarte von jedem Bild separat abzurufen (34, 35).

7. Verfahren nach Anspruch 6, wobei die Differenzmaschine (32) ein neuronales Netzwerk (35) umfasst, das neuronale Schichten (37, 38, 39), vorzugsweise vollständig verbundene Schichten, enthält, die die verbundenen Merkmalskarten von Bildern verarbeiten, um die Blickdifferenz der Bilder abzurufen.

8. Verfahren nach einem der Ansprüche 5 bis 7, wobei die Differentialmaschine (32) mit einem Trainingsdatensatz (55) trainiert wird, der durch Paarung eines ersten und eines zweiten Trainingsbildes (50, 51) desselben Auges des Benutzers und/oder eines Individuums als Eingabesatz mit einer gemessenen Blickdifferenz (54) erstellt wird.

9. Verfahren nach Anspruch 8, wenn es von Anspruch 2 abhängt, wobei mindestens ein Referenzbild des Satzes von Referenzbildern (20$_{a-e}$) als das erste und/oder zweite Trainingsbild (50, 51) verwendet wird.

10. System (60) zur Blickabschätzung, umfassend:
ein Eingabebildabrufmodul (62), das so konfiguriert ist, dass es ein Eingabebild (10) eines Auges (11) eines Benutzers abruft, **dadurch gekennzeichnet, dass** das System weiters Folgendes aufweist:

ein Referenzbildabrufmodul (61), das so konfiguriert ist, dass es ein erstes Referenzbild (20) eines Auges (21) einer Person mit einem ersten bekannten Referenzblick (22) abruft; und
ein Verarbeitungsmodul (63), das konfiguriert ist:

um das Eingangsbild (10) und das Referenzbild (20) zu verarbeiten, um eine erste Blickdifferenz (30) zwischen dem Blick (12) des Eingangsbildes und dem Blick (22) des ersten Referenzbildes zu schätzen, und um den Blick (12) des Benutzers auf der Grundlage der ersten Blickdifferenz (30) und des ersten Referenzblicks (22) des ersten Referenzbildes zu erhalten.

11. Das System nach Anspruch 10, wobei

das Referenzbild-Abrufmodul (61) so konfiguriert ist, dass es einen Satz (25) verschiedener Referenzbilder von Augen von Personen mit bekannten Referenzblicken abruft; und wobei
das Verarbeitungsmodul (63) auch konfiguriert ist

das Eingangsbild (10) und den Satz von Referenzbildern zu verarbeiten, um eine gemeinsame Blickdifferenz und/oder einen Satz von Blickdifferenzen zwischen dem Blick (12) des Eingangsbildes und den Blicken der Referenzbilder des Satzes zu schätzen, und um
den Blick (12) des Benutzers unter Verwendung der gemeinsamen Blickdifferenz und/oder des Satzes von Blickdifferenzen und der Referenzblicke zu erhalten.

12. System nach Anspruch 11, wobei der Satz (25) von Referenzbildern das erste Referenzbild und ein zweites Referenzbild mit einem zweiten Referenzblick umfasst, wobei

das Verarbeitungsmodul (63) so konfiguriert ist, dass es das Eingangsbild (10) und das zweite Referenzbild verarbeitet, um eine zweite Blickdifferenz zwischen dem Blick (12) des Eingangsbildes und dem Blick des zweiten Referenzbildes zu schätzen; und wobei

das Verarbeitungsmodul (63) konfiguriert ist, um den Blick (12) des Benutzers durch folgende Gewichtungen abzurufen:

einer Gewichtung eines ersten Ergebnisses auf der Grundlage der ersten Blickdifferenz und des ersten Referenzblicks; und
einer Gewichtung eines zweiten Ergebnis auf der Grundlage der zweiten Blickdifferenz und des zweiten Referenzblicks.

13. System nach einem der Ansprüche 10 bis 12, wobei das Verarbeitungsmodul (63) eine Differenzmaschine (32) umfasst, die so konfiguriert ist, dass sie die erste Blickdifferenz (30), die zweite Blickdifferenz, die gemeinsame Blickdifferenz und/oder den Satz von Blickdifferenzen abruft.

14. System nach Anspruch 13, wobei die Differentialmaschine (32) ein tiefes neuronales Netzwerk (34, 35) umfasst, das vorzugsweise drei neuronale Faltungsschichten (37, 38, 39) aufweist.

15. Computerlesbares Speichermedium, auf dem ein Computerprogramm aufgezeichnet ist, wobei das Computerprogramm so konfiguriert ist, dass es die Schritte des Verfahrens nach einem der Ansprüche 1 bis 9 durchführt, wenn das Programm auf einem Prozessor ausgeführt wird.

**Revendications**

1. Procédé mis en œuvre par ordinateur pour estimer le regard d'un utilisateur, comprenant les étapes suivantes :

récupérer une image d'entrée (10) d'un œil (11) d'un utilisateur ;
récupérer un regard (12) de l'utilisateur

**caractérisé en ce que** l'étape consistant à récupérer le regard (12) de l'utilisateur comprend :

récupérer une première image de référence (20) d'un œil (21) d'une personne ayant un premier regard de référence connu (22) ;
traiter l'image d'entrée (10) et ladite première image de référence (20) de manière à estimer une première différence de regard (30) entre le regard (12) de l'œil dans l'image d'entrée et le regard connu (22) de l'œil dans ladite première image de référence ;
utiliser ladite différence de regard (30) et ledit premier regard de référence connu (22) pour récupérer le regard (12) de l'utilisateur.

2. Procédé selon la revendication 1, comprenant en outre les étapes suivantes :

dans lequel ladite étape de récupération de la première image de référence comprend une étape de récupération d'un ensemble (25) d'images de référence distinctes d'yeux sur des personnes ayant des regards de référence connus ;
dans lequel ladite étape d'estimation de la différence de regard comprend une étape de traitement de l'image d'entrée (10) et dudit ensemble d'images de référence afin d'estimer une différence de regard commune et/ou un ensemble de différences de regard entre le regard (12) de l'image d'entrée et les regards des images de référence ;
et dans lequel ladite étape de récupération du regard (12) de l'utilisateur comprend une étape d'utilisation de ladite différence de regard commune et/ou dudit ensemble de différences de regard et desdits regards de référence.

3. Procédé selon la revendication 2, dans lequel ledit ensemble (25) d'images de référence comprend la première image de référence et une deuxième image de référence avec un deuxième regard de référence ; et dans lequel ladite étape consistant à récupérer le regard (12) de l'utilisateur comprend une étape de pondération :

d'un premier résultat de regard basé sur la première différence de regard et le premier regard de référence ; et
d'un deuxième résultat basé sur une deuxième différence de regard et ledit deuxième regard de référence, la deuxième différence de regard étant obtenue en traitant séparément l'image d'entrée (10) et la deuxième image de référence.

4. Procédé selon la revendication 2 ou 3, dans lequel chaque image de référence dudit ensemble (25) représente le même œil du même utilisateur avec un regard distinct.

5. Procédé selon l'une quelconque des revendications 1 à 4, dans lequel ladite première différence de regard (30), ladite deuxième différence de regard, ladite différence de regard commune et/ou ledit ensemble de différences de regard sont estimées au moyen d'un machine différentielle (32).

6. Procédé selon la revendication 5, dans lequel ladite machine différentielle (32) comprend un réseau neuronal (34, 35), de préférence un réseau neuronal profond comprenant des couches convolutives pour extraire une carte de caractéristiques de chaque image séparément (34, 35).

7. Procédé selon la revendication 6, dans lequel ladite machine différentielle (32) comprend un réseau neuronal (35), comprenant des couches neuronales (37, 38, 39), de préférence des couches entièrement connectées, traitant les cartes de caractéristiques jointes des images afin de récupérer la différence de regard desdites images.

8. Procédé selon l'une quelconque des revendications 5 à 7, dans lequel ladite machine différentielle (32) est entraînée à l'aide d'un ensemble de données d'entraînement (55) constitué en associant une première et une deuxième image d'entraînement (50, 51) d'un même œil de l'utilisateur et/ou d'une personne en tant qu'ensemble d'entrée avec une différence de regard mesurée (54).

9. Procédé selon la revendication 8, lorsqu'elle dépend de la revendication 2, dans lequel au moins une image de référence dudit ensemble d'images de référence ($20_{a-e}$) est utilisée comme première et/ou deuxième image d'entraînement (50, 51).

10. Système (60) d'estimation du regard, comprenant :

   un module de récupération d'image d'entrée (62) configuré pour récupérer une image d'entrée (10) d'un œil (11) d'un utilisateur ; **caractérisé en ce que** le système comprend en outre
   un module de récupération d'image de référence (61) configuré pour récupérer une première image de référence (20) d'un œil (21) d'une personne ayant un premier regard de référence connu (22) ; et
   un module de traitement (63) configuré :

   pour traiter l'image d'entrée (10) et l'image de référence (20) de manière à estimer une première différence de regard (30) entre le regard (12) de l'image d'entrée et le regard (22) de ladite première image de référence, et pour

   récupérer le regard (12) de l'utilisateur sur la base de ladite première différence de regard (30) et dudit premier regard de référence (22) de la première image de référence.

11. Système selon la revendication 10, dans lequel

   le module de récupération d'images de référence (61) est configuré pour récupérer un ensemble (25) d'images de référence distinctes d'yeux sur des personnes ayant des regards de référence connus ; et dans lequel
   le module de traitement (63) est également configuré
   pour traiter l'image d'entrée (10) et ledit ensemble d'images de référence de manière à estimer une différence de regard commune et/ou un ensemble de différences de regard entre le regard (12) de l'image d'entrée et les regards des images de référence, et pour
   récupérer le regard (12) de l'utilisateur à l'aide de ladite différence de regard commune et/ou dudit ensemble de différences de regard et desdits regards de référence.

12. Le système selon la revendication 11, dans lequel ledit ensemble (25) d'images de référence comprend la première image de référence et une deuxième image de référence avec un deuxième regard de référence, dans lequel

   le module de traitement (63) est configuré pour traiter l'image d'entrée (10) et la deuxième image de référence afin d'estimer une deuxième différence de regard entre le regard (12) de l'image d'entrée et le regard de la deuxième image de référence ; et dans lequel
   le module de traitement (63) est configuré pour récupérer le regard (12) de l'utilisateur en pondérant :

   un premier résultat basé sur la première différence de regard et ledit premier regard de référence ; et

un deuxième résultat basé sur la deuxième différence de regard et le deuxième regard de référence.

13. Système selon l'une quelconque des revendications 10 à 12, dans lequel le module de traitement (63) comprend une machine différentielle (32) configurée pour récupérer ladite première différence de regard (30), ladite deuxième différence de regard, ladite différence de regard commune et/ou ledit ensemble de différences de regard.

14. Système selon la revendication 13, dans lequel ladite machine différentielle (32) comprend un réseau neuronal profond (34, 35), de préférence comportant trois couches neuronales convolutives (37, 38, 39).

15. Support de stockage lisible par ordinateur sur lequel est enregistré un programme informatique, le programme informatique étant configuré pour exécuter les étapes du procédé selon l'une quelconque des revendications 1 à 9, lorsque le programme est exécuté sur un processeur.

| | |
|---|---|
| Retrieve an input image of an eye of the user | S20 Select and/or recognize and/or identify the eye/user |

S10

23

S21 Retrieve a reference image of an/the eye of the user with a known gaze's direction

10

20     22

S3 Determine a difference between the directions of the gazes

30

S4 Determine the direction of the gaze of the users

12

Figure 1

20     21     10     11

12

30

22

Figure 2

Figure 3

Figure 4a

Figure 4b

Figure 5

60

Camera — 65

Input retrieving
module — 62

Processing
module — 63

Reference
retrieving module — 61

Database — 64

Communication
module — 68

66

67

Figure 6

**EP 3 844 553 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014146199 A1